# DEMANDE DE BREVET EUROPEEN

(11) **EP 2 278 690 A1**
(43) Date de publication de la demande: **26.01.2011**
(21) Numéro de dépôt: 10168301.9
(22) Date de dépôt: 02.07.2010
(51) Int. Cl.: H02K 5/16, H02K 26/00, B29C 47/08

(54) **Moteur mono palier**

(30) Priorité: 24.07.2009 FR 0955191
(71) Demandeur: SSD Parvex SAS, 21000 Dijon (FR)
(72) Inventeur: Remoissenet, Pascal, 21000 Dijon (FR); Bendahmane, Bouziane, 21000 Dijon (FR); Delor, Olivier, 21640 Vougeot (FR)
(74) Mandataire: Maureau, Philippe

(57) **Abrégé**

La présente invention concerne un moteur couple (1) comprenant un carter fixe (9) renfermant un stator (2) et un rotor (3) destiné à l'entraînement en rotation d'un arbre (4) ou moyeu (6) de transmission, ledit arbre (4) ou moyeu (6) de transmission étant solidaire en rotation du rotor (3), et au moins une partie de l'arbre (4) ou moyeu (6) de transmission prenant appui axialement pendant la rotation contre une partie du carter (9) par l'intermédiaire d'une butée de roulement (16), le moteur (1) comprenant également des moyens de roulement (17) destinés à permettre la rotation relative entre un ensemble comprenant le carter (9) et le stator (2) et un ensemble comprenant le rotor (3) et le moyeu (6) et/ou l'arbre (4), **caractérisé en ce que** la butée de roulement (16) et les moyens de roulement (17) sont montés en opposition les uns par rapport aux autres et supportés par un support (18) ou des supports fixes sur un même côté du moteur couple (1).

## Description

La présente invention concerne un moteur couple.

Il est connu notamment du document EP2017063 de réaliser un moteur couple. Ce moteur couple est bien adapté à des applications nécessitant un fort couple avec une faible vitesse de rotation de l'axe du moteur couple. Une de ces applications concerne l'extrusion de matières plastiques par une extrudeuse.

Un tel moteur couple comprend :
- un carter fixe renfermant un stator et un rotor destiné à l'entraînement d'un arbre ou moyeu de transmission selon un axe de rotation prédéfini, ledit arbre ou moyeu de transmission étant solidaire en rotation du rotor, et au moins une partie de l'arbre ou moyeu de transmission prenant appui axialement pendant la rotation contre une partie fixe du carter par l'intermédiaire d'une butée à rotule sur rouleaux, et
- deux paliers à roulement à billes disposés à l'avant et à l'arrière du moteur, montés entre l'arbre ou moyeu de transmission et une partie fixe du carter, et assurant le positionnement radial du rotor au centre du stator.

La butée à rotule sur rouleaux étant un roulement, un tel moteur compte au total trois roulements.

Ce document enseigne également qu'un dispositif de précharge à ressorts ainsi qu'un dispositif de graissage peut être utilisé pour chacun de ces roulements afin d'éviter qu'ils ne soient trop bruyants.

Ces roulements étant éloignés les uns des autres, un tel moteur nécessite de répartir plusieurs de ces dispositifs à l'intérieur du moteur couple.

De plus, les paliers à roulement à billes doivent obligatoirement porter sur une partie fixe du carter. Le dimensionnement de ces roulements et en particulier leur diamètre extérieur ne permet pas d'atteindre directement les parois fixes du carter. C'est pourquoi, il est nécessaire d'adjoindre au carter des organes additionnels qui viennent bloquer en rotation les bagues extérieures de ces roulements.

Cette disposition engendre un encombrement supplémentaire, et en particulier sur la partie arrière du moteur couple sur laquelle est monté le roulement arrière. En effet, afin de prévoir un démontage du moteur par l'arrière, cet organe doit être disposé sur le flasque arrière refermant le moteur. Cet organe contribue donc à renforcer le flasque arrière mais contribue également à alourdir le moteur et à compliquer son démontage.

Sur ce point, il est nécessaire de disposer d'un outil d'extraction spécial pour pouvoir déposer la vis d'extrusion bloquée dans l'arbre.

Enfin, les deux paliers étant des paliers à roulement à billes, ceux-ci ne supportent pas des charges radiales élevées. En ce sens, leur remplacement par des roulements à rouleaux pourrait être envisagé, ce type de roulement supportant des charges radiales très élevés, mais ne serait pas aisé du fait de l'exigence d'alignement rigoureux des portées de ce type de roulement qui est ici rendu difficile à cause de la distance séparant ces deux paliers.

Au final, la configuration des différents éléments d'un moteur couple selon l'état de la technique reste complexe, ce qui induit des difficultés dans l'assemblage et dans le démontage d'un tel moteur.

En particulier, le remplacement de certaines pièces peut se révéler problématique dans le cadre d'une maintenance curative ou préventive du moteur couple.

La présente invention a pour but de résoudre tout ou partie des inconvénients mentionnés ci-dessus.

A cet effet, la présente invention concerne un moteur couple comprenant un carter fixe renfermant un stator et un rotor destiné à l'entraînement en rotation d'un arbre ou moyeu de transmission, ledit arbre ou moyeu de transmission étant solidaire en rotation du rotor de façon à former un ensemble mobile destiné à transmettre le mouvement de rotation du moteur vers un premier côté avant du moteur, un second côté arrière du moteur étant situé à l'opposé du côté avant, au moins une partie de l'ensemble mobile prenant appui axialement pendant la rotation contre une partie du carter par l'intermédiaire d'une butée de roulement, le moteur comprenant également des moyens de roulement destinés à permettre la rotation relative entre un ensemble fixe comprenant le carter et le stator et l'ensemble mobile, **caractérisé en ce que** la butée de roulement et les moyens de roulement sont montés en opposition les uns par rapport aux autres sur des moyens de support prenant appui d'un seul côté du moteur couple.

Il est entendu qu'un montage en opposition d'un roulement par rapport à un autre selon le même axe de montage, se traduit par définition par une opposition de leur composante axiale selon ce même axe de montage dû à une charge radiale.

Ce type de montage permet de supporter des charges radiales et axiales importantes.

De plus, les bagues sur ces types de roulements étant séparables, ceux-ci permettent de faciliter le montage et le démontage.

Cette disposition permet également de disposer d'un moteur couple à un seul palier comprenant deux roulements montés des moyens de supports prenant appui d'un même côté du moteur couple. Le roulement arrière n'est plus nécessaire et par conséquent l'organe fixe solidaire du carter qui maintenait en rotation la bague extérieure du roulement arrière n'est lui aussi plus nécessaire, ce qui allège l'ensemble du moteur couple, réduit son encombrement, et facilite son démontage par l'arrière par le dépôt du flasque qui devient simple tôle de fermeture.

Selon un mode de réalisation, la butée de roulement et les moyens de roulement sont positionnés du même côté par rapport à un plan médian du stator transversal à l'axe de rotation du rotor.

Selon un mode de réalisation, la butée de roulement et les moyens de roulement sont précontraints.

En outre, la proximité des roulements font qu'ils restent à même température et que l'on peut appliquer une précontrainte identique lors du montage des deux roulements, les contraintes dus à des dilatations thermiques différentielles entre les deux roulements étant sensiblement proches.

De plus, les roulements étant par définition des assemblages présentant des jeux, cette même proximité des roulements permet de faciliter le bon alignement des portées ainsi que le réglage du jeu axial.

Avantageusement, la butée de roulement est une butée à rotule sur rouleaux.

Selon un mode de réalisation, les moyens de roulement monté en opposition de la butée de roulement comprennent un roulement à rouleaux coniques.

Selon un autre mode de réalisation, les moyens de roulement et la butée de roulement montés en opposition comprennent deux roulements à rouleaux coniques

Selon un autre mode de réalisation, les moyens de roulement et la butée de roulement montés en opposition comprennent deux roulements à billes à contact oblique

Selon un autre mode de réalisation, les moyens de roulement monté en opposition de la butée de roulement comprennent un roulement à billes à contact oblique.

Selon un mode de réalisation, aucune pièce étant à la fois reliée à l'arbre ou moyeu de transmission et au rotor ne passe entre la butée de roulement et les moyens de roulement montés en opposition.

Avantageusement, les dispositifs de précharge ainsi que les dispositifs de graissage sont regroupés à l'avant du moteur et disposent d'un circuit de graissage commun à la butée de roulement et aux moyens de roulements.

De toute façon, l'invention sera bien comprise à l'aide de la description qui suit, en référence aux figures schématiques annexées représentant, à titre d'exemple non limitatif, une forme d'exécution de ce moteur couple, où :
La figure 1 illustre un moteur couple selon l'état de la technique.
La figure 2 illustre un moteur couple selon l'invention.

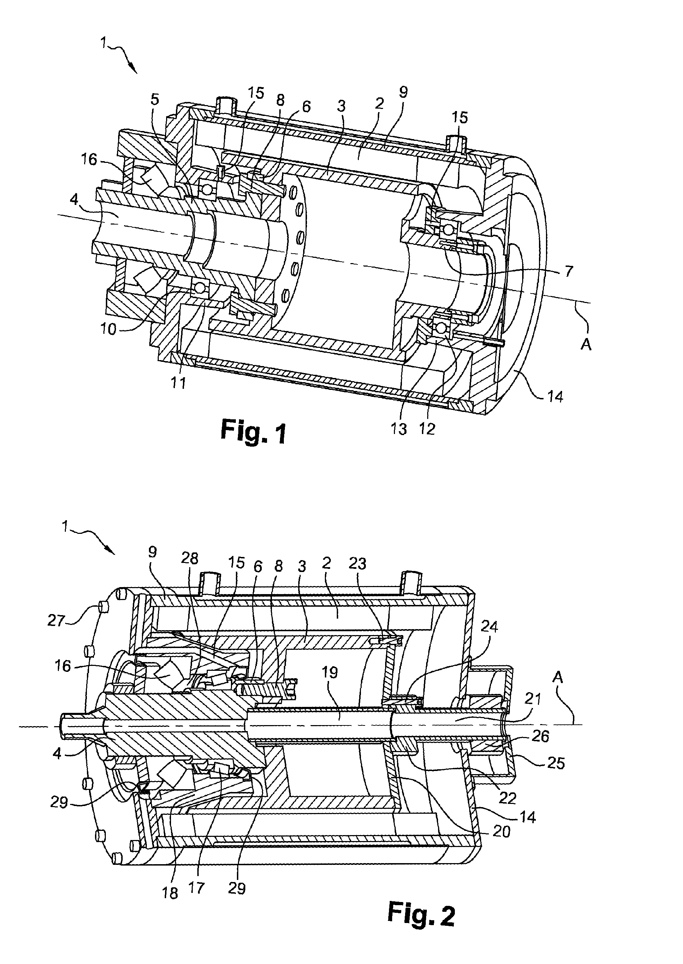

La figure 1 représente un moteur couple 1 selon l'état de la technique, comportant un mécanisme d'entraînement utilisé pour entrainer un moyeu 6 relié à un arbre de transmission 4 possédant un axe de rotation A. Le mécanisme d'entraînement comporte un carter 9 fixe dans lequel sont intégré un stator 2 et un rotor 3. Le stator 2 de forme cylindrique entoure le rotor 3 de forme cylindrique. Le stator 2 et le rotor 3 sont centrés sur l'axe de rotation A du moyeu 6 relié à l'arbre de transmission 4. Le rotor 3 est relié au moyeu 6 par l'intermédiaire de vis de fixation 8 disposées axialement selon l'axe A.

Le moteur couple 1, le carter 9, et les éléments du moteur couple 2, 3 comprennent respectivement une partie avant et une partie arrière le long de l'axe de rotation A ; la partie avant étant située du côté où l'arbre de transmission 4 saille hors du carter 9, et la partie arrière étant située du côté opposé audit arbre de transmission 4.

Un flasque 14 disposé à l'arrière du moteur couple 1 obture l'intérieur du moteur couple 1. Ce flasque 14 est fixé au carter 9.

L'ensemble de l'arbre 4 et du rotor 3 est soutenue à l'aide de deux paliers à roulements à billes 10, 12 disposés à l'avant et à l'arrière du rotor 3.

La bague intérieure du roulement à bille 10 disposé à l'avant est fixée sur une excroissance 5 de l'arbre 4 définissant une zone cylindrique de diamètre adapté à l'emmanchement du roulement 10.

La bague extérieure du roulement à bille 10 est fixée sur un organe support 11 rendu solidaire du carter 9 et définissant une zone de support cylindrique de diamètre adapté pour retenir en rotation la bague extérieure du roulement 10.

La bague intérieure du roulement à bille 12 disposé à l'arrière est fixée sur une excroissance 7 du rotor 3 définissant une zone cylindrique de diamètre adapté à l'emmanchement du roulement 12.

La bague extérieure du roulement à bille 12 est fixée sur un organe support 13 rendu solidaire du flasque 14 et définissant une zone de support cylindrique de diamètre adapté pour retenir en rotation la bague extérieure du roulement 10.

Chacun de ces roulements 10, 12 est précontraint et est relié à un dispositif de graissage 15 individuel qui lui est propre.

A l'extrémité avant du moteur couple 1, il est disposé une butée de roulement 16. Cette butée 16 est du type butée à rotule sur rouleaux. Sa bague intérieure est emmanchée sur l'arbre 4 et sa bague extérieure est bloquée en rotation par le même organe support 11 de la bague extérieure du roulement à bille 10.

Cette butée de roulement 16 supporte les charges axiales importantes provenant de l'arbre 4.

Un moteur couple 1 selon l'invention, tel qu'il est présenté à la figure 2, comporte un carter 9 fixe auquel est relié un stator 2.

A l'intérieur du stator 2, un rotor 3 rendu solidaire d'un moyeu 6 d'un arbre 4 par l'intermédiaire de vis de fixation 8 disposée selon l'axe A évolue en rotation selon ce même axe A.

Le rotor 3, le moyeu 6 et l'arbre 4 forment un ensemble mobile 3, 4, 6 destiné à transmettre le mouvement de rotation du moteur vers un premier côté avant du moteur, un second côté arrière du moteur étant situé à l'opposé du côté avant,

A la différence du moteur couple 1 de l'état de la technique décrit ci-dessus, un moteur couple 1 selon l'invention comporte un palier unique supportant l'ensemble de l'arbre 4 et du rotor 3 qui est formé par la butée de roulement 16 et par un roulement à rouleaux coniques 17. La butée de roulement 16 est également une butée de roulement à rouleaux coniques et présente un dimensionnement plus important que le roulement 17.

Les bagues intérieures de la butée de roulement 16 et du roulement à rouleaux coniques 17 sont emmanchées dans l'arbre 4 et entrainées en rotation avec lui.

Les bagues extérieures de ces deux roulements 16, 17 sont quant à elles bloquées en rotation par un même organe support 18 situé à l'avant du moteur couple, c'est-à-dire au-delà de la jonction du rotor 3 avec l'arbre 4 ou moyeu 6, et définissant des zones de support cylindriques de diamètres adaptés au blocage axial de ces deux roulements 16, 17.

Ces deux roulements 16, 17 sont montés en opposition : une charge radiale sur ces deux roulements 16, 17 entraine une opposition de leur composante axiale selon leur axe de montage A.

Ce montage en opposition est ici un montage dit en « O » par opposition à un montage dit en « X » illustrant le croisement des directions de contact des éléments roulants des deux roulements 16, 17 montés en opposition.

Ce type de montage permet de supporter des charges radiales et axiales importantes mais nécessite un bon alignement des portées et un bon réglage du jeu axial.

Ce bon alignement et réglage du jeu axial entre ces deux roulements est facilité d'une part par le fait que ces deux roulements 16, 17 soient proches l'un de l'autre et d'autre part par le fait que la bague intérieure de ces deux roulements 16, 17 est montée sur la même pièce : l'arbre de transmission 4, et que les bagues extérieures soient en appui sur la même pièce.

Un arbre creux 19 traverse le rotor 3 suivant l'axe A ainsi qu'un flasque 20 fermant la partie arrière du rotor 3. Ce flasque 20 est maintenu solidaire du rotor 3 par l'intermédiaire de vis de fixation 23 disposées comme illustré à la figure 2 suivant l'axe A sur la périphérie du rotor 3.

Cet arbre creux 19 se prolonge par un autre axe creux 21 s'étendant vers l'arrière du moteur couple 1 toujours selon l'axe A. Cet arbre creux 21 possède un moyeu 22 qui lui permet d'être solidaire du flasque 20 par l'intermédiaire de vis de fixation 24 disposées suivant l'axe A.

Le moteur couple 1 selon l'invention comporte en outre une partie en saillie 25 sur sa face arrière qui est fixée au flasque 14 servant de capot.

Cette partie en saillie 25 comporte un palier lisse 26 pour l'arbre creux 21. Ce palier lisse 26 n'a ici qu'une fonction de centrage et ne subie pas de charge axiale ou radiale pouvant résulter de l'action d'une force exercée sur l'arbre 4.

Ainsi, il n'est pas nécessaire de disposer d'un second palier dans la partie arrière du moteur couple 1.

Les deux roulements 16, 17 sont précontraints et lubrifiés par un même dispositif de graissage 15. Le lubrifiant est maintenu dans un même compartiment 28 contenant les deux roulements 16, 17 et délimité par deux joints SPI 29 assurant l'étanchéité du compartiment 28.

Le flasque 14 obturant l'arrière du moteur couple 1 n'assure plus de fonction de support et ne sert plus que de cache ou capot.

Par l'absence de certains des éléments constituant un moteur couple 1 selon l'état de la technique, un moteur couple 1 selon l'invention a un encombrement réduit, est allégé et rendu simplifié dans ses opérations de montage et démontage.

Ce moteur couple 1 trouve son application dans des opérations d'extrusion et est par conséquent souvent installé sur des extrudeuses.

L'arbre 4 est alors prolongé par une vis sans fin chargée d'injecter des polymères préchauffés à l'intérieur d'un moule.

L'entrainement d'une vis d'extrusion se caractérise par une faible vitesse de rotation mais avec un couple important.

Le polymère exerce une charge axiale importante sur le filetage de la vis sans fin. La butée de roulement 16 est chargée de supporter cette charge ce qui explique le dimensionnement plus important de cette butée par rapport à celui du roulement 17.

Cependant, cette vis sans fin présente une longueur non négligeable contenue à l'intérieur d'un fourreau. Lors de la poussée du polymère dans le moule, celui-ci exerce une force radiale sur les parois du fourreau. Cette force se répercute radialement sur la butée de roulement 16 et sur le roulement 17 du moteur couple 1 selon l'invention.

La disposition de ces deux roulements 16, 17 de par leur montage en opposition et de par leur proximité relative est tout à fait apte à supporter de telles charges radiales, ces deux roulements 16, 17 se répartissant les charges radiales d'une façon beaucoup plus efficace que dans le cas de roulements éloignés.

Sans s'éloigner du cadre de l'invention, des roulements supplémentaires, contigus aux roulements 16, 17 peuvent être agencés sur l'arbre 4 afin d'augmenter la résistance aux charges imposés par la vis sans fin.

Lors de la phase de démontage consistant en la dépose de l'arbre 4, le technicien de maintenance commence par déposer le capot arrière 14. Il dépose ensuite le flasque arrière 20 du rotor 3 ainsi que l'arbre creux 21 s'étendant vers l'arrière du moteur couple 1 en dévissant les vis de fixation 23 maintenant le flasque arrière 20 sur le rotor 3. Il n'est pas nécessaire de déposer l'arbre creux arrière 21 en désserrant les vis de fixation 24 de son moyeu 22 sur le flasque arrière 20.

Le technicien a ainsi accès aux vis de fixation 8 maintenant le moyeu 6 de l'arbre 4 contre le rotor 3. Après avoir dévisser ces vis de fixation 8, le technicien dévisse les vis de fixation 27 maintenant la face avant du moteur couple 1 ainsi que le support 18 de la butée de roulement 16 et du roulement 17.

Après avoir dégager l'ensemble arbre 4 et support 18, il devient aisé d'extraire les deux roulements à l'aide d'une presse. Il dégage tout d'abord la butée de roulement 16 avec son support 18, puis il dégage le roulement 17 de l'arbre 4.

La phase de remontage reprend ces mêmes étapes mais en sens inverse. Le technicien commence par monter le roulement 17 sur un nouvel arbre 4 à l'aide d'une presse. Il monte ensuite le support 18 puis la butée de roulement 16 en prenant soin de régler le jeu axial entre les deux roulements 16, 17. Il pose ensuite deux joints SPI neufs.

Le technicien introduit ensuite l'ensemble dans son emplacement sur le moteur couple 1, il ressert les vis de fixation 8 du moyeu 6 de l'arbre 4 sur le rotor 3 au couple prescrit puis ressert les vis de fixation 27 de la face avant du moteur couple 1. Il finit par remonter le flasque arrière 20 du rotor 3 ainsi que le capot 14 avec sa partie en saillie 25.

Comme il va de soi, l'invention ne se limite pas aux formes et mode de réalisation préférentiel décrit ci-dessus, à titre d'exemple non-limitatif ; elle en embrasse au contraire toutes les variantes.

## Revendications

1. Moteur couple (1) comprenant un carter fixe (9) renfermant un stator (2) et un rotor (3) destiné à l'entraînement en rotation d'un arbre (4) ou moyeu (6) de transmission, ledit arbre (4) ou moyeu (6) de transmission étant solidaire en rotation du rotor (3) de façon à former un ensemble mobile (3, 4, 6) destiné à transmettre le mouvement de rotation du moteur vers un premier côté avant du moteur, un second côté arrière du moteur étant situé à l'opposé du côté avant, au moins une partie de l'ensemble mobile (3, 4, 6) prenant appui axialement pendant la rotation contre une partie du carter (9) par l'intermédiaire d'une butée de roulement (16), le moteur (1) comprenant également des moyens de roulement (17) destinés à permettre la rotation relative entre un ensemble fixe comprenant le carter (9) et le stator (2) et l'ensemble mobile (3, 4, 6),
**caractérisé en ce que**
la butée de roulement (16) et les moyens de roulement (17) sont montés en opposition les uns par rapport aux autres sur des moyens de support (18) prenant appui d'un seul côté du moteur couple (1).

2. Moteur couple (1) selon la revendication 1 dans lequel la butée de roulement (16) et les moyens de roulement (17) sont positionnés du même côté par rapport à un plan médian du stator (2) transversal à l'axe de rotation (A) du rotor (3).

3. Moteur couple (1) selon l'une des revendications 1 à 2 dans lequel la butée de roulement et les moyens de roulement sont précontraints.

4. Moteur couple (1) selon l'une des revendications 1 à 3 dans lequel la butée de roulement (16) est une butée à rotule sur rouleaux.

5. Moteur couple (1) selon l'une des revendications 1 à 4 dans lequel les moyens de roulement (17) montés en opposition de la butée de roulement (16) comprennent un roulement à rouleaux coniques.

6. Moteur couple (1) selon l'une des revendications 1 à 4 dans lequel les moyens de roulement (17) montés en opposition de la butée de roulement (16) comprennent un roulement à billes à contact oblique.

7. Moteur couple (1) selon l'une des revendications 1 à 3 dans lequel les moyens de roulement (17) et la butée de roulement (16) montés en opposition comprennent deux roulements à rouleaux coniques.

8. Moteur couple (1) selon l'une des revendications 1 à 3 dans lequel les moyens de roulement (17) et la butée de roulement (16) montés en opposition comprennent deux roulements à billes à contact oblique.

9. Moteur couple (1) selon l'une des revendications précédente dans lequel aucune pièce étant à la fois reliée à l'arbre (4) ou moyeu de transmission (6) et au rotor (3) ne passe entre la butée de roulement (16) et les moyens de roulement (17) montés en opposition.

10. Moteur couple (1) selon l'une des revendications précédente dans lequel des dispositifs de précharge ainsi que des dispositifs de graissage (15) sont regroupés à l'avant du moteur (1) et disposent d'un circuit de graissage commun à la butée de roulement (16) et aux moyens de roulement (17).
